**Europäisches Patentamt**

**European Patent Office**

**Office européen des brevets**

(19)

(11) **EP 1 568 666 A1**

(12) **EUROPÄISCHE PATENTANMELDUNG**

(43) Veröffentlichungstag:
**31.08.2005 Patentblatt 2005/35**

(51) Int Cl.⁷: **C03C 4/00**, C03C 3/06,
C03B 19/14

(21) Anmeldenummer: **05003753.0**

(22) Anmeldetag: **22.02.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **25.02.2004 DE 102004009577**

(71) Anmelder: **Heraeus Quarzglas GmbH & Co. KG
63450 Hanau (DE)**

(72) Erfinder:
• **Kühn, Bodo
63450 Hanau (DE)**
• **Radosevic, Igor
63071 Offenbach (DE)**
• **Uebbing, Bruno
63755 Alzenau (DE)**

(74) Vertreter: **Staudt, Armin Walter et al
Patentanwalt
Auf der Mauer 8
63674 Altenstadt (DE)**

(54) **Verfahren zur Herstellung eines optischen Bauteils aus Quarzglas**

(57) Verfahren zur Herstellung eines optischen Bauteils für die Übertragung ultravioletter Strahlung einer Wellenlänge von 250 nm und kürzer, wobei das Bauteil aus einem zylinderförmigen Quarzglasrohling mit einem mittleren OH-Gehalt von mehr als 50 Gew.-ppm gefertigt wird, der einer ersten Temperbehandlung zur Beseitigung von Spannungsdoppelbrechung unterworfen wird, dadurch gekennzeichnet, dass der Quarzglasrohling einer zweiten Temperbehandlung unterworfen wird, die ein Aufheizen und Halten des Quarzglasrohlings bei einer niedrigen Temper-Temperatur im Bereich zwischen 350°C und 800°C und während einer Temperdauer von mehr als 1 Stunde umfasst, mit der Maßgabe, dass ein Quarzglasrohling eingesetzt wird, bei dem in Richtung senkrecht zur Zylinderlängsachse die Abweichung vom mittleren OH-Gehalt maximal 20 Gew.-ppm beträgt.

EP 1 568 666 A1

**Beschreibung**

Die Erfindung betrifft ein Verfahren zur Herstellung eines optischen Bauteils für die Übertragung ultravioletter Strahlung einer Wellenlänge von 250 nm und kürzer, wobei das Bauteil aus einem zylinderförmigen Quarzglasrohling mit einem mittleren OH-Gehalt von mehr als 50 Gew.-ppm gefertigt wird, der einer ersten Temperbehandlung zur Beseitigung von Spannungsdoppelbrechung unterworfen wird.

Optische Bauteile aus Quarzglas werden für die Übertragung energiereicher, ultravioletter Laserstrahlung beispielsweise in Form von Belichtungsoptiken in Mikrolithographiegeräten für die Herstellung hochintegrierter Schaltungen in Halbleiterchips eingesetzt. Die Belichtungssysteme moderner Mikrolithographiegeräte sind mit Excimerlasern bestückt, die energiereiche, gepulste UV-Strahlung einer Wellenlänge von 248 nm (KrF-Laser) oder von 193 nm (ArF-Laser) abgeben.

Kurzwellige UV-Strahlung kann in optischen Bauteilen aus synthetischem Quarzglas Defekte erzeugen, die zu Absorptionen im ultravioletten Wellenlängenbereich führen. Von besonderem Interesse ist das Verhalten von Quarzglas gegenüber kurzwelliger UV-Strahlung, wie sie UV-Excimerlaser in Mikrolithographiegeräten abgeben. Art und Ausmaß dieser Defektbildung hängen von den jeweiligen Bestrahlungsbedingungen ab und werden beeinflusst von der Qualität des eingesetzten Quarzglases, die im wesentlichen durch strukturelle Eigenschaften, wie Dichte und Homogenität und von der chemischen Zusammensetzung bestimmt wird.

In der Literatur sind eine Vielzahl von Schädigungsmustern beschrieben, bei denen es bei andauernder UV-Bestrahlung zu einem Anstieg der Absorption kommt. Die induzierte Absorption kann zum Beispiel linear ansteigen, oder es wird nach einem anfänglichen Anstieg eine Sättigung erreicht. Weiterhin wird beobachtet, dass eine anfänglich registrierte Absorptionsbande zunächst wenige Minuten nach Abschalten des Lasers verschwindet, sich aber nach erneuter Bestrahlung schnell wieder auf dem einmal erreichten Niveau einpendelt. Dieses Schädigungsmuster wird als "rapid-damage-process" (RDP) bezeichnet. Hintergrund dafür ist, dass Netzwerkdefekte durch Reaktion mit im Quarzglas vorhandenen Wasserstoffatomen zunächst abgesättigt werden und sich dadurch optisch (als Absorption) nicht bemerkbar machen. Die Stabilität dieser Bindungen ist jedoch gering, so dass sie aufbrechen können, wenn das Bauteil UV-Strahlung ausgesetzt wird.

Ein als "Kompaktierung" bekanntes Schädigungsverhalten tritt während bzw. nach Laserbestrahlung mit hoher Energiedichte auf und äußerst sich in einer lokalen Dichteerhöhung des Glases in dem durchstrahlten Volumen, die wiederum zu einem lokal inhomogenen Anstieg des Brechungsindex und damit zu einer Verschlechterung der Abbildungseigenschaften des optischen Bauteils führt.

Abhängig vom Typ des Quarzglases kann auch ein gegenteiliger Effekt auftreten, wenn ein optisches Bauteil aus dem Quarzglas mit Laserstrahlung geringer Energiedichte aber hoher Pulszahl beaufschlagt wird. Unter diesen Bedingungen wird eine sogenannte "Dekompaktierung" beobachtet (in der angelsächsischen Literatur auch als "rarefaction" bezeichnet), die mit einer lokalen Herabsetzung des Brechungsindex einhergeht. Hierbei kommt es durch die Bestrahlung ebenfalls zu einer lokalen Dichteänderung in dem durchstrahlten Volumen und damit einhergehend zu einer Verschlechterung der Abbildungseigenschaften.

Kompaktierung und Dekompaktierung sind somit Defekte, die sich nicht zwangsläufig in einer Zunahme der strahlungsinduzierten Absorption äußern, die aber die Lebensdauer eines optischen Bauteils begrenzen können. Der Einfluss des OH-Gehalts auf Kompaktierung und Dekompaktierung bei UV-Bestrahlung wurde untersucht von B. Kühn, B. Uebbing, M. Stamminger, I, Radosevic, S. Kaiser in "Compaction versus expansion behavior related to the OH-content of synthetic fused silica under prolonged UV-laser irradiation", J. Non-Cryst. Solids, No. 330 (2003), S.23-32.

Bei mikrolithographischen Projektionsbelichtungsanlagen besteht allgemein die Forderung, dass eine im Bereich einer Pupillerlebene des Beleuchtungssystems bereitgestellte Lichtverteilung möglichst homogen und winkelerhaltend in eine zur Pupillenebene des Beleuchtungssystems konjugierte Pupillenebene des Projektionsobjektivs übertragen werden sollte. Jede im Lichtweg erzeugte Veränderung des Winkelspektrums führt zu einer Verzerrung der Intensitätsverteilung in der Objektivpupille, was zu einer unsymmetrischen Einstrahlung und damit zu einer Verschlechterung der Abbildungsleistung führt.

In dem Zusammenhang spielt die Doppelbrechung eine wichtige Rolle, da diese die Abbildungstreue optischer Bauteile aus Quarzglas beeinträchtigt. Spannungsdoppelbrechung in Quarzglas entsteht beim inhomogenen Abkühlen des Rohlings für das herzustellende optische Bauteil.

Die Lichtausbreitung in doppelbrechendem Quarzglas ist dadurch gekennzeichnet, dass der einfallende Lichtstrahl (virtuell) in zwei senkrecht zueinander und zur Fortpflanzungsrichtung polarisierte Teilstrahlen zerfällt, deren Polarisationsrichtungen parallel und senkrecht zur optischen Achse in Richtung der Belastung (Druckspannung oder Zugspannung) verlaufen, und die unterschiedliche Ausbreitungsgeschwindigkeiten haben. Die Achse der schnelleren Ausbreitungsgeschwindigkeit wird im Folgenden auch als "Schnelle Achse der Doppelbrechung" bezeichnet. Es hat sich gezeigt, dass die schnellere Achse der Spannungsdoppelbrechung nach dem üblichen Tempern des Rohlings, wie es weiter unten näher beschrieben ist, einen eher tangentialen Verlauf um die Zylinderlängsachse aufweist.

Ein übliches Temperprogramm zum Abbau mechanischer Spannungen des Rohlings und zur Erzeugung einer homogenen Verteilung der fiktiven Temperatur wird in der EP 0 401 845 A2 vorgeschlagen. Der Rohling wird bei einer Temperatur von etwa 1100 °C über eine Dauer von 50 Stunden gehalten und anschließend in einem langsamen Abkühlschritt mit einer Abkühlrate von 2 °C/h zunächst auf 900 °C gebracht, bevor der Temperofen abgeschaltet wird, so dass nachfolgend im geschlossenen Ofen eine der natürlichen Auskühlung des Ofens entsprechende Abkühlung des Quarzglasrohlings auf Raumtemperatur erfolgt.

Mittels derartiger Temperbehandlungen kann die Spannungsdoppelbrechung des Rohlings reduziert werden.

Gemäß der EP 1 114 802 A1 wurde gefunden, dass die Größe und die Verteilung der Spannungsdoppelbrechung eines Quarzglasrohlings durch eine Temperbehandlung im Temperaturbereich zwischen 1500 °C und 1800 °C, und vorzugsweise zwischen 1550 °C und 1650 °C, eingestellt werden kann.

Es ist zu beachten, dass es infolge lang andauernder Heizbehandlungen bei hoher Temperatur durch Ausdiffusion von Komponenten - insbesondere von OH-Gruppen und von Wasserstoff - zu lokalen Veränderungen der chemischen Zusammensetzung und zu einem Konzentrationsgradienten von oberflächennahen Bereichen des Rohlings nach innen hin kommen kann. Die dadurch verursachte Inhomogenität wirkt sich wiederum auf den radialen Verlauf des Brechungsindex in dem herzustellenden Bauteil aus. Außerdem können während der Behandlungsdauer Verunreinigungen in das Quarzglas eindiffundieren, wobei insbesondere Natrium, Nickel und Kupfer als schädlich zu benennen sind. Spannungsdoppelbrechung und chemische Homogenität des Quarzglas-Bauteils sind daher häufig nicht unabhängig voneinander optimierbar, oder nur auf Kosten anderer Eigenschaften, wie der Strahlenbeständigkeit.

Der Erfindung liegt daher die Aufgabe zugrunde, ein Verfahren zur Herstellung eines zylindrischen optischen Bauteils anzugeben, das sich durch eine geringe Dichte- und Brechzahländerung bei Bestrahlung mit UV-Strahlung und insoweit durch ein günstiges Schädigungsverhaltens gegenüber UV-Strahlung auszeichnet, und das andererseits im Hinblick auf die verbleibende Spannungsdoppelbrechung optimiert ist.

Diese Aufgabe wird ausgehend von dem eingangs beschriebenen Verfahren erfindungsgemäß dadurch gelöst, dass der Quarzglasrohling einer zweiten Temperbehandlung unterworfen wird, die ein Aufheizen und Halten des Quarzglasrohlings bei einer niedrigen Tempertemperatur im Bereich zwischen 350°C und 800°C und während einer Temperdauer von mehr als 1 Stunde umfasst, mit der Maßgabe, dass ein Quarzglasrohling eingesetzt wird, bei dem in Richtung senkrecht zur Zylinderlängsachse die Abweichung vom mittleren OH-Gehalt maximal 20 Gew.-ppm beträgt.

Das optische Bauteil wird nach der Endbehandlung aus dem Quarzglasrohling gefertigt, wobei zum Einstellen der geometrischen Form und einer hohen Oberflächenqualität in der Regel noch ein Abtrag von Material erforderlich ist. Der Quarzglasrohling umfasst insoweit einen Konturbereich, welcher der Außenkontur des herzustellenden optischen Bauteils entspricht, und ein diesen Konturbereich umgebendes Übermaß, das aus wirtschaftlichen Erwägungen jedoch so klein wie möglich gehalten wird.

Der Quarzglasrohling wird nach seiner letzten Heißbearbeitung - etwa einem Verformungsprozess - stets einem Tempervorgang unterzogen, um Spannungen, die durch ein schnelles Abkühlen nach der Heißbearbeitung entstanden sind, abzubauen, und um so die mechanische Stabilität und die optischen Eigenschaften (Brechzahlverteilung und Spannungsdoppelbrechung) zu verbessern. Typische Temperprogramme für Quarzglasrohlinge sind auf ein Halten bei einer Temperatur von über 1100 °C ausgelegt, wobei anschließend ein langsames Abkühlen auf einen Temperaturbereich um 800 °C - 1000 °C erfolgt, wie dies in der oben erwähnten EP 0 401 845 A1 beschrieben ist.

Für die auf diese Weise getemperten zylindrischen Quarzglas-Rohlinge sind die beiden im Folgenden erläuterten Eigenschaften, an denen die vorliegende Erfindung ansetzt, typisch:

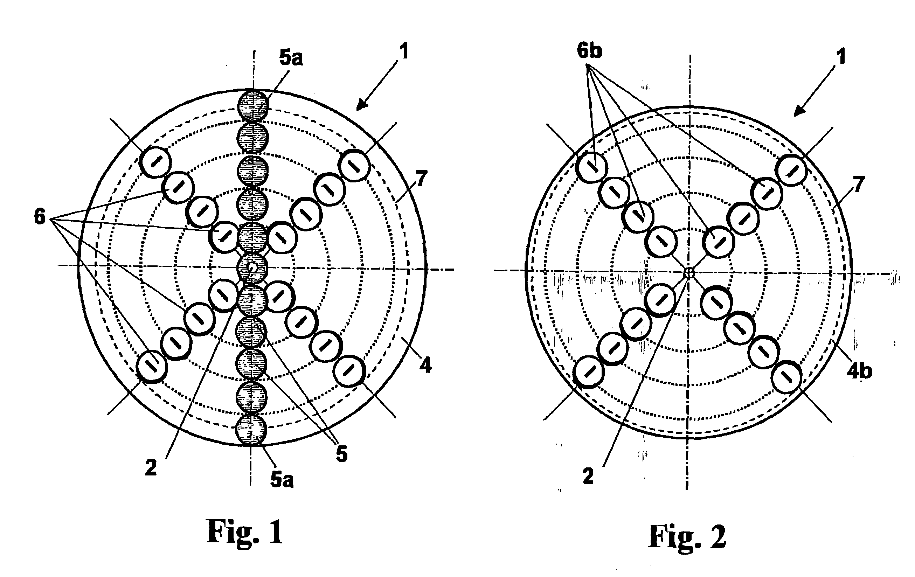

- Zum einen hat es sich gezeigt, dass sich nach dem Abkühlen der zylinderförmigen Rohlinge - möglicherweise bedingt durch deren Zylindersymmetrie - Verläufe der schnellen Achse der Spannungsdoppelbrechung eingestellt haben, die überwiegend tangentialer Natur sind. Das bedeutet, dass in Messpunkten in einer senkrecht zur Zylinderlängsachse des Rohlings verlaufenden Messebene im Wesentlichen solche Verläufe der Spannungsdoppelbrechung ermittelt werden, bei denen die schnelle Achse der Doppelbrechung einen eher tangentialen Verlauf um die Zylinderlängsachse aufweist. Eine derartige Verteilung der schnellen Achse der Spannungsdoppelbrechung ist in Figur 1 schematisch dargestellt.

- Zum anderen ist bekannt, dass aus dem Temperaturbereich zwischen 1000 °C und 1500 °C rasch abgekühltes Quarzglas ein geringeres spezifisches Volumen und damit eine höhere spezifische Dichte aufweist, als langsam abgekühltes Quarzglas. Dieser Effekt beruht laut "R. Brückner, Silicon Dioxide; Encyclopedia of Applied Physics, Vol. 18 (1997), S. 101-131", auf einer Anomalie von synthetischem Quarzglas, bei dem der Verlauf des spezifischen Volumens im Bereich zwischen 1000 °C und 1500 °C einen negativen Temperaturkoeffizienten aufweist; das heißt, dass das spezifische Volumen von Quarzglas in diesem Temperaturbereich mit abnehmender Temperatur zunimmt. Damit einhergehend wird beim Tempern von Quarzglas bei niedriger Temperatur eine Erhöhung des spezifischen (molaren) Volumens mit der Temperdauer beobachtet, wobei die Volumenerhöhung umso deutlicher ausfällt, je höher die Temper-Temperatur ist.

Es hat sich gezeigt, dass diese beiden typischen Eigenschaften des getemperten Quarzglasrohlings durch die zweite Temperbehandlung bei der vergleichsweise geringen Temperatur im Bereich zwischen 350 °C und 800 °C beeinflusst werden, wobei sich die im Folgenden erläuterte überraschende Wirkung ergibt:

- Durch die zweite Temperbehandlung wird die räumliche Verteilung der schnellen Achse der Doppelbrechung von einer eher tangentialen Ausrichtung auf eine eher radiale Ausrichtung in Bezug auf die Zylinderlängsachse verärldert. Eine derartige Verteilung der schnellen Achse der Spannungsdoppelbrechung, die in Figur 2 schematisch dargestellt ist, wird im Folgenden auch als "Spannungsdoppelbrechung radialsymmetrischer Natur" und der Prozess der Umorientierung des Winkels als "Änderung der Winkelverteilung" bezeichnet.

  Die Spannungsdoppelbrechung sowohl tangentialer Natur als radialsymmetrischer Natur verändert den Polarisationszustand und die Wellenfront des im Quarzglasrohlings übertragenen Lichtes und erzeugt dadurch Abbildungsfehler. Was die durch die jeweilige Spannungsdoppelbrechung verursachte Phasendifferenz des übertragenen Lichtes anbelangt, zeigen sich jedoch entgegengesetzte Wirkungen. Das bedeutet, dass eine in einem Quarzglas-Bauteil infolge der Spannungsdoppelbrechung der einen Art erzeugte Phasendifferenz des übertragenen Lichtes ganz oder teilweise kompensiert werden kann durch eine anschließende Übertragung des Lichtes in einem Quarzglas-Bauteil, das eine Spannungsdoppelbrechung der anderen Art aufweist.

  Die nach dem erfindungsgemäßen Verfahren hergestellten optischen Bauteile sind daher geeignet, Abbildungsfehler anderer optischer Bauteile im gleichen Strahlungsweg zu korllpensieren. Durch den Kompensationseffekt kann ein höherer Absolutwert der Spannungsdoppelbrechung in einzelnen optischen Bauteilen toleriert werden.

  Insoweit ist der Quarzglasrohling im Hinblick auf die verbleibende Spannungsdoppelbrechung optimiert, wobei das erfindungsgemäße Verfahren gegenüber dem eingangs erwähnten, bekannten Verfahren den weiteren Vorteil hat, dass aufgrund der Temperbehandlung bei vergleichsweise niedriger Temperatur die chemische Zusammensetzung des Quarzglasbauteils nur wenig geändert wird.

- Es hat sich weiterhin gezeigt, dass die Temperbehandlung bei der vergleichsweise niedrigen Temperatur eine deutliche Wirkung auf das Schädigungsverhalten des Quarzglases gegenüber UV-Strahlung hat. Insbesondere wird gerade bei solchem Quarzglas, das typischerweise anfällig für Dekompaktierung ist, nach Bestrahlung mit UV-Licht eine überraschend geringe Dekompaktierung (Rarefaction) im Vergleich zu dem unbahandelten Quarzglas beobachtet.

  Dies lässt sich dadurch erklären, dass die Temperbehandlung eine Relaxation der Glasstruktur und damit eine Erhöhung des spezifischen Volumens des Quarzglas-Bauteils insgesamt bewirkt und dadurch diese "vorweggenommene" Dekompaktierung der Glasstruktur einer lokalen Dekompaktierung bei UV-Bestrahlung entgegenwirkt. Insoweit wird durch die Nachbehandlung auch die Strahlenschädigung durch "Rarefaction" verhindert oder verringert, so dass sich das erfindungsgemäß hergestellte Quarzglas-Bauteil durch eine geringe lokale Dichte- und Brechzahländerung bei Bestrahlung mit UV-Strahlung auszeichnet.

Die Wirkung der Temperbehandlung bei der vergleichsweise niedrigen Tempertemperatur ist in wirtschaftlich vertretbaren Temperzeiten nur zu erreichen, wenn ein Quarzglasrohling eingesetzt wird, der einen OH-Gehalt von mehr als 50 Gew.-ppm aufweist. Der OH-Gehalt erleichtert die Relaxation der Glasstruktur, die erforderlich ist sowohl für eine Änderung - bzw. für eine Umkehr - der Winkelverteilung der schnellen Achse der Spannungsdoppelbrechung, als auch zur Verminderung der Dekompaktierung.

Im Randbereich des zylinderförmigen Quarzglasrohlings ergibt sich infolge vorhergehender Heißprozesse in der Regel ein geringerer OH-Gehalt als in der Mitte des Rohlings. Der vergleichsweise geringe OH-Gehalt führt bei der nachfolgenden Temperbehandlung zu Spannungen, welche die gewünschte Änderung der Winkelverteilung erschweren.

Eine weitere unabdingbare Voraussetzung für den Erfolg des erfindungsgemäßen Verfahrens ist daher eine homogene Verteilung der OH-Gruppenkonzentration. Entscheidend ist hierbei die radiale Verteilung der OH-Gruppen in dem Quarzglasrohling; die Abweichung vom mittleren OH-Gehalt in Richtung senkrecht zur Zylinderlängsachse des Rohlings darf im Bereich der Kontur des optischen Bauteils maximal 20 Gew.-ppm betragen. Andernfalls ist eine homogene Relaxation der Glasstruktur über den gesamten Konturbereich des Bauteils nicht zu erreichen, und eine Umkehr der Winkelverteilung wird erschwert oder verhindert. Im Fall eines radialen Gradienten in der OH-Konzentration ist die Verteilung der OH-Gruppen im Idealfall radialsymmetrisch um die Zylinderlängsachse.

Das Vorliegen einer homogenen radialen Verteilung der OH-Gruppenkonzentrationen in dem Quarzglasrohling wird sichergestellt, indem an mehreren Messpunkten, die in einem gleichmäßigen Raster in einer senkrecht zur Zylinderachse verlaufenden Messebene verteilt sind, die OH-Gehalte spektroskopisch über die Dicke des Rohlings ermittelt werden. Erfindungsgemäß ist zu gewährleisten, dass keiner der an den Messpunkten ermittelten OH-Gehalte von dem Mittelwert, der sich aus den Einzelmessungen ergibt, um mehr als 20 Gew.-ppm abweicht.

Es hat sich als vorteilhaft erwiesen, wenn die Temperdauer mindestens 50 h beträgt.

Bei kürzeren Temperdauern ist sowohl der Effekt der Umkehr der Winkelverteilung in Richtung auf eine radialsymmetrische Verteilung in Bezug auf die Zylinderlängsachse als auch der Effekt der "Vorab-Relaxation" der Glasstruktur zur Verminderung der Dekompaktierung wenig ausgeprägt.

Dabei hat es sich jedoch gezeigt, dass die Temperdauer vorzugsweise bei maximal 720 h liegt. Bei Temperdauern von mehr als 720 h ergibt sich keine nennenswerte Verstärkung der genannten Effekte mehr, so dass das Verfahren infolge der langen Prozesszeiten unwirtschaftlicher wird und die Nachteile infolge von Ausdiffusion von Komponenten und einer zunehmenden Kontamination durch eindiffundierende Verunreinigungen überwiegen.

Als besonders günstig hat es sich erwiesen, wenn der Quarzglasrohling in einer Atmosphäre getempert wird, die Wasserstoff enthält.

Es ist bekannt, dass sich Wasserstoff auf die Strahlenbeständigkeit des Quarzglases gegenüber energiereicher UV-Strahlung vorteilhaft auswirken kann, insbesondere in bezug auf die Langzeitstabilität des Quarzglases.

Weiterhin hat es sich als günstig erwiesen, den Quarzglasrohling bei einem Druck zwischen 1 und 10 bar zu tempern.

Ein erhöhter Druck beschleunigt die Umstrukturierung und Relaxation des Glasnetzwerks und damit auch die Änderung der Winkelverteilung der schnellen Achse der Spannungsdoppelbrechung. Bei einem Tempern unter wasserstoffhaltiger Atmosphäre wird durch den Überdruck zudem die Beladung mit Wasserstoff beschleunigt.

Die zweite Temperbehandlung umfasst vorteilhafterweise ein Halten bei einer Temperatur von mindestens 500°C, mit der Maßgabe, dass der mittlere Wasserstoffgehalt des Quarzglasrohlings infolge der zweiten Temperbehandlung nicht um mehr als +/- 20% (bezogen auf den anfänglichen Wasserstoffgehalt) verändert wird.

Durch Tempern im Bereich zwischen 500 °C und 800 °C wird insbesondere eine beschleunigte Umkehr der Winkelverteilung in Richtung auf eine radialsymmetrische Verteilung in Bezug auf die Zylinderlängsachse bewirkt. Andererseits wird diese Verfahrensweise jedoch nur dann bevorzugt, wenn der Atmosphäre beim Tempern des Quarzglasrohlings entweder kein Wasserstoff hinzugefügt wird, oder allenfalls in einer Menge die dem Wasserstoff-Partialdruck entspricht, der erforderlich ist, um den in dem Quarzglas anfänglich enthaltenen Wasserstoff in etwa beizubehalten, wobei eine Abweichung von +/- 20% bezogen auf den anfänglich enthaltenen Wasserstoff akzeptabel ist. Eine darüber hinausgehende zusätzliche Beladung des Quarzglasrohlings mit Wasserstoff ist aus dem folgenden Grund zu vermeiden. Thermodynamisch bedingt entstehen bei den höheren Temperaturen (500 °C - 800 °C) in Gegenwart von Wasserstoff verstärkt Si-H-Gruppen. Diese tragen zu dem eingangs erläuterten RDP-Problem bei, indem bei Bestrahlung mit energiereichem UV-Licht aus der Si-H-Gruppe ein sogenanntes E'-Zentrum und atomarer Wasserstoff entsteht. Das E'-Zentrum bewirkt eine erhöhte Absorption bei einer Wellenlänge von 210 nm und macht sich auch im angrenzenden UV-Wellenlängenbereich ungünstig bemerkbar.

Sofern das Quarzglas mit Wasserstoff beladen wird, erfolgt die Beladung des Quarzglasrohlings daher vorzugsweise bei niedriger Temperatur unterhalb von 500 °C, so dass die Ausbildung von Si-H-Gruppen reduziert wird.

Als besonders günstig hat sich eine Modifikation des erfindungsgemäßen Verfahrens erwiesen, bei welcher der Quarzglasrohling eine Außenkontur des herzustellenden optischen Bauteils mit Übermaß umfasst, wobei zwischen der ersten und der zweiten Temperaturbehandlung mindestens ein Teil des Übermaßes entfernt wird.

Es hat sich gezeigt, dass der Quarzglasrohling nach der ersten Temperbehandlung im Bereich der Oberfläche in der Regel einen Gradienten in seiner chemischen Zusammensetzung aufweist. Insbesondere ist der OH-Gehalt und der Wasserstoffgehalt in den oberflächennahen Bereichen vermindert. Dies führt bei dem nachfolgenden zweiten Temperprozess zwangsläufig zu Spannungen und zu einer inhomogenen Verteilung der fiktiven Temperatur des Quarzglases, welche sich wiederum auf die Relaxation des Glasnetzwerks und insbesondere auf die Winkelverteilung der schnellen Achse der Spannungsdoppelbrechung und deren Änderung während des zweiten Temperprozesses auswirken. Um dies zu vermeiden, wird bei der bevorzugten Verfahrensmodifikation ein Quarzglasrohling bereitgestellt, der die Kontur des herzustellenden optischen Bauteils mit Übermaß umfasst, so dass der Quarzglasrohling nach der ersten Temperbehandlung im Hinblick auf einen Gradienten in seiner Zusammensetzung kontrolliert und das Übermaß gegebenenfalls vollständig oder teilweise vor der zweiten Temperbehandlung abgetragen werden kann. Unter diesem Aspekt ist insbesondere das Übermaß im Bereich der Zylindermantelfläche des Rohlings schädlich. Auf diese Weise wird ein Gradient in der Zusammensetzung zwischen dem Innenbereich und der Oberfläche des Quarzglasrohlings vor der zweiten Temperbehandlung beseitigt oder mindestens vermindert, und damit eine Beeinträchtigung der Wirkungen der Temperbehandlung durch innere Spannungen des Rohlings vermindert. Denn beim Tempern des so vorbereiteten Rohlings kommt es somit nicht aufgrund unterschiedlicher Glaszusammensetzungen und fiktiver Temperaturen zu Spannungen zwischen der Oberfläche und dem Inneren und damit zu einem Einfluss auf die Verteilung des Winkels der schnellen Achse der Doppelbrechung und damit auf die Polarisationseigenschaften des Quarzglasrohlings.

Andererseits hat sich besonders günstig erwiesen, wenn der Quarzglasrohling vor der zweiten Temperbehandlung eine Außenkontur des herzustellenden optischen Bauteils mit Übermaß umfasst, und das Übermaß der Zylinder-Stirnflächen im Bereich zwischen 1 mm und 5 mm beträgt.

Die Beibehaltung eines Übermaßes während der zweiten Temperbehandlung hat den Vorteil, dass ein sich erst im Verlaufe der Temperbehandlung ausbildender Gradient in der Zusammensetzung zwischen Oberfläche und dem Innern des Rohlings nachträglich entfernt werden kann, so dass ein optisches Bauteil mit homogener Zusammensetzung erhalten wird. Unter diesem Aspekt ist insbesondere das Übermaß im Bereich der Stirnflächen des zylinderförmigen Rohlings nützlich.

Vorzugsweise beträgt der mittlere OH-Gehalt des Quarzglasrohlings vor der Temperaturbehandlung mindestens 450 Gew.-ppm.

Diese Verfahrensvariante des erfindungsgemäßen Verfahrens hat sich insbesondere hinsichtlich der Verbesserung des Dekompaktierungsverhaltens als vorteilhaft erwiesen. Es hat sich gezeigt, dass die Erhöhung des spezifischen Volumens des Quarzglases durch die zweite Temperbehandlung vom mittleren OH-Gehalt des Quarzglasrohlings vor der Temperaturbehandlung abhängt, und bei OH-Gehalten oberhalb von 450 Gew.-ppm - ebenso wie die Dekompaktierungsneigung - besonders ausgeprägt ist.

Eine weitere Verbesserung ergibt sich, wenn die mittlere Wasserstoffkonzentration des Quarzglasrohlings nach der zweiten Temperaturbehandlung mindestens $3 \times 10^{16}$ Moleküle/cm$^3$ beträgt.

Der Wasserstoffgehalt trägt zur Verbesserung der Strahlenbeständigkeit bei. Der Wasserstoff ist entweder in einer Konzentration von mindestens $3 \times 10^{16}$ Moleküle/cm$^3$ bereits vor der Temperaturbehandlung im Rohling enthalten, wobei darauf zu achten ist, dass während der Temperaturbehandlung die Wasserstoffkonzentration infolge von ausdiffundierendem Wasserstoff aus dem Quarzglasrohling nicht unter die genannte Untergrenze absinkt. Oder der Quarzglasrohling wird während der Temperaturbehandlung mit Wasserstoff auf eine Konzentration oberhalb der genannten Mindestkonzentration beladen.

Das erfindungsgemäße Verfahren ermöglicht somit eine Änderung der Verteilung des Winkels der schnellen Achse der Doppelbrechung unter weitgehender Beibehaltung der chemischen Zusammensetzung des Quarzglases und seiner Eigenschaften, und es bewirkt außerdem eine Verbesserung des herzustellenden optischen Bauteils in Bezug auf dessen Strahlenbeständigkeit, indem es die lokale Dekompaktierung des Quarzglases durch UV-Bestrahlung durch Erzeugen einer vorab dekompaktierten Struktur verringert.

Nachfolgend wird die Erfindung anhand von Ausführungsbeispielen und einer Zeichnung näher erläutert. In der Zeichnung zeigen im einzelnen

**Figur 1** eine Draufsicht auf eine senkrecht zur Zylinderlängsachse eines Quarzglasharrens verlaufende Messebene vor der zweiten Temperbehandlung in schematischer Darstellung,

**Figur 2** die Draufsicht gemäß Figur 1 nach der zweiten Temperbehandlung,

**Figur 3** ein Diagramm zum Grad der Umorientierung des Winkels der schnellen Achse der Spannungsdoppelbrechung in Abhängigkeit von der Temperdauer,

**Figur 4** ein Balkendiagramm, das die Winkelverteilung der schnellen Achse der Doppelbrechung vor und nach der zweiten Temperbehandlung sowie die mathematisch ermittelte Differenz zeigt, und

**Figur 5** ein Diagramm zur Erläuterung des Auftretens von Kompaktierung und Dekompaktierung mit typischen Entwicklungen bei unterschiedlich behandelten Messproben in schematischer Darstellung.

**Probenherstellung**

Es wurden scheibenförmige Barren aus synthetischem Quarzglas durch Flammenhydrolyse von SiCl$_4$ anhand des bekannten OVD-Außenabscheidaverfahrens (Sootverfahren) und des VAD-Abscheideverfahrens unter Direktverglasung der erzeugten SiO$_2$-Partikel hergestellt. Das nach dem Sootverfahren erhaltene Quarzglas zeichnet sich durch einen mittleren OH-Gehalt unterhalb von etwa 300 Gew.-ppm aus, und das durch Direktverglasen hergestellte Quarzglas weist einen vergleichsweise hohen OH-Gehalt oberhalb von 400 Gew.-ppm auf.

Zum Abbau mechanischer Spannungen und zur Verminderung der Doppelbrechung wurden die Barren einer ersten Temperbehandlung unterzogen, wobei der sie unter Luft und Atmosphärendruck auf 1130 °C erhitzt und anschließend mit einer Abkühlrate von 1 °C/h auf eine Temperatur von 900 °C abgekühlt wurde. Nach dem Abschalten des Ofens kühlten die Proben in dem geschlossenen Ofen auf Raumtemperatur ab.

Nach einem oberflächlichen Schleifen und Ätzen wurde an den so vorbereiteten, zylinderförmigen Quarzglas-Barren jeweils die folgenden Eigenschaften gemessen:

- der mittlere Wasserstoffgehalt,
- der mittlere OH-Gehalt und die maximale Abweichung vom mittleren OH-Gehalt in Richtung senkrecht zur Zylinderachse,
- die Amplitude der Spannungsdoppelbrechung an mehreren, gleichmäßig über dem Barren gleichmäßig verteilten Messpunkten und die jeweilige Orientierung der schnellen Achse der Spannungsdoppelbrechung,

- das Kompaktierungs- und Dekompaktierungsverhalten bei Bestrahlung mit UV-Strahlung.

In Abhängigkeit von dem gemessenen OH-Gehalt und dessen Verlauf wurde von den Quarzglas-Barren daraufhin ein Teil des radialen Übermaßes entfernt und diese dann einer zweiten Temperbehandlung bei niedrigerer Temperatur unterzogen, die weiter unten noch näher beschrieben wird. Anschließend wurden einige der oben genannten Eigenschaften erneut gemessen. Die jeweiligen Messmethoden werden im Folgenden näher erläutert:

**Bestimmung des Wasserstoffgehalts**

Der Wasserstoffgehalt und dessen Verteilung in den Barren wurde anhand von Ramanmessungen ermittelt. Die verwendete Messmethode ist beschrieben in: Khotimchenko et al.; "Determining the Content of Hydrogen Dissolved in Quartz Glass Using the Methods of Raman Scattering and Mass Spectrometry" Zhumal Prikladnoi Spektroskopii, Vol. 46, No. 6 (Juni 1987), S. 987-991.

Der mittlere Wasserstoffgehalt der Barren vor der zweiten Temperbehandlung lag im Bereich zwischen 2 $x10^{16}$ Molekülen/cm$^3$ und 2 $x10^{17}$ Molekülen/cm$^3$. Die Einzelwerte sind in Spalte 7 von Tabelle 1 angegeben.

**Bestimmung des OH-Gehalts**

An den Barren wurde vor dem zweiten Tamperprozess der mittlere OH-Gehalt und die maximale Abweichung vom mittleren OH-Gehalt ermittelt. Anhand einer Messreihe wurde für jeden Barren an jeweils elf über den radialen Querschnitt (senkrecht zur Zylinderlängsachse der Barren) verteilten Messpunkten spektroskopisch der OH-Gehalt bestimmt, wie dies in Figur 1 schematisch anhand der Punkte 5 und 5a dargestellt ist. Anhand der Messreihe wurde der mittlere OH-Gehalt eines jeden Barrens und die Abweichung davon in jedem einzelnen Messpunkt ermittelt. Der Messfleck bei der OH-Bestimmung hat einen Durchmesser von etwa 5 mm.

Es zeigte sich, dass die an den jeweiligen Randpunkten 5a ermittelten OH-Gehalte nach der ersten Temperbehandlung mehr als 20 Gew.-ppm unter dem Mittelwert lagen, der unter Berücksichtigung dieser Randpunkte berechnet worden war. Daher wurde - mit Ausnahme der Versuchsbarren 7 und 8 - das vorher vorhandene Übermaß, das heißt der über die Außenkontur 7 (Figur 1) des optischen Bauteils hinausragende radiale Bereich 4, soweit entfernt, bis die Abweichung des OH-Gehalts in dem Bereich bei weniger als 20 Gew.-ppm vom Mittelwert lag. Die Stärke des zu entfernenden Randbereiches lag zwischen 5 und 15 mm. Bei den Barren mit den Versuchsnummern 7 und 8 wurde der Randbereich trotz zu geringem OH-Gehalt nicht entfernt. Bei dem Barren Nr. 7 mit einem mittleren OH-Gehalt von etwa 213 Gew.-ppm wies der Randbereich einen um etwa 25 Gew.-ppm geringeren OH-Gehalt auf, und bei dem Barren Nr, 8 betrug die Maximalabweichung des OH-Gehalts im Randbereich zum mittleren OH-Gehalt (ermittelt unter Berücksichtigung des OH-Gehalts im Randbereich) sogar mehr als 30 Gew.-ppm.

Der mittlere OH-Gehalt vor dem zweiten Temperprozess lag daraufhin in jedem Fall (außer bei Barren Nr. 7) im Bereich zwischen 225 und 252 Gew.-ppm bei den nach dem Sootverfahren hergestellten Barren, und im Bereich zwischen 800 und 850 Gew.-ppm bei den durch Direktverglasen erzeugten Barren. Mit Ausnahme der Versuchsbarren 7 und 8 lag der die maximale Abweichung vom jeweiligen Mittelwert bei weniger als 20 Gew.-ppm.

Der Durchmesser der Barren vor dem Abtragen des Übermaßes und vor der zweiten Temperbehandlung lag jeweils bei 250 mm und die Barrendicken variierten zwischen 36 und 52 mm. Die jeweiligen OH-Gehalte für die acht Versuchsbarren sind in Tabelle 1 angegeben.

**Spannungsdoppelbrechung**

Der Ermittlung der Spannungsdoppelbrechung in der Ebene senkrecht zur Zylinderlängsachse der Barren wurde jeweils ein kreisförmiger Messbereich mit einem Durchmesser von 190 mm zugrunde gelegt, der etwa dem Außendurchmesser des herzustellenden optischen Bauteils entsprach, und der in den Figuren 1 und 2 anhand einer gestrichelten Umfangslinie 7 angedeutet ist. Innerhalb dieses Bereiches wurden in einem gleichmäßigen Raster von 10 mm x 10 mm jeweils die Amplitude der Spannungsdoppelbrechung und die Orientierung der schnellen Achse der Spannungsdoppelbrechung gemessen. Die Punkte 6 und 6b in den Figuren 1 und 2 stellen einzelne Messpunkte des 10x10mm-Rasters schematisch dar (ohne Wiedergabe der exakten Lage der Messpunkte).

Die Spannungsdoppelbrechung wurde hierzu bei einer Wellenlänge von 633 nm (He-Ne-Laser) nach der in "Measurement of the Residual Birefingence Distribution in Glass Laser Disk by Transverse Zeeman Laser" (Electronics and Communications in Japan, Part 2. Vol. 74, No. 5, 1991; (englische Übersetzung in Vol 73-C-I, No. 10, 1990 pp. 652 - 657) beschriebenen Methode ermittelt.

An den Barren wurde vor und nach der zweiten Temperbehandlung eine Spannungsdoppelbrechung von jeweils maximal 2 nm/cm gemessen, wobei die Brechzahlverteilung derart homogen war, dass der Unterschied zwischen dem Maximalwert und dem Minimalwert unterhalb von 2x10⁻⁶ lag. Allerdings wurde eine Veränderung der Orientierung der schnellen Achse der Spannungsdoppelbrechung gefunden, wie er im Folgenden noch näher beschreiben ist, und der schematisch in Figur 2 dargestellt ist.

Aus den gemessenen Daten wurde anhand folgender Berechnungsformel eine vorzeichenbehaftete Maßzahl "M" für die Spannungsdoppelbrechung unter Berücksichtigung der Orientierung der schnellen Achse der Spannungsdoppelbrechung ermittelt:

$$M = \frac{1}{N} \sum_{i=1}^{N} SDB(r_i, \varphi_i) \cdot \delta_i \qquad (1)$$

N       Gesamtzahl der Datenpunkte entsprechend dem 10 mm x 10 mm - Raster
SDB     Amplitude (Betrag) der Spannungsdoppelbrechung beim i-ten Datenpunkt
$r_i$        Abstand des i-ten Datenpunkts zur Zylinderlängsachse (Radius)
$\varphi_i$        Polarwinkel des i-ten Datenpunkts
$\delta_i$        = 1,     falls beim i-ten Datenpunkt der Winkel der schnellen Achse eine überwiegend tangentiale Ausrichtung in Bezug auf die Zylinderlängsachse hat.
            = -1,    falls beim i-ten Datenpunkt der Winkel der schnellen Achse eine überwiegend radiale Ausrichtung in Bezug auf die Zylinderlängsachse hat

**Ermittlung des Kompaktierungs- und Dekompaktierungsverhaltens**

Zur Bestimmung des Kompaktierungs- und Dekompaktierungsverhaltens wurden aus dem jeweiligen Barrenmaterial spezielle Proben mit Abmessungen von 25mmx25mmx100mm präpariert, die auf ihren beiden gegenüberliegenden 25mmx25mm-Flächen poliert wurden. Diese Proben wurden jeweils vor und nach der zweiten Temperbehandlung in einem Bereich nahe der Probenmitte gepulster UV-Strahlung einer Wellenlänge von 193 nm mit einer Pulslänge von 20 ns und Energiedichten von 35 µJ/cm² ausgesetzt. Die Pulszahl bei diesen Bestrahlungsversuchen betrug jeweils 25 Milliarden (2,5 x 10¹⁰ Pulse). Der Effekt dieser Bestrahlung wurde als relative Zunahme bzw. Abnahme des Brechungsindex im bestrahlten Bereich im Vergleich zum unbestrahlten Bereich unter Einsatz eines handelsüblichen Interferometers (Zygo GPI-XP) bei einer Wellenlänge von 633 nm gemessen.

Anhand eines Vorversuches wurden geeignete Temperzeiten für die Umorientierung des Winkels der schnellen Achse ermittelt. Nach dem Sootverfahren hergestellte Versuchsbarren wurden jeweils bei einer Temperatur von 450 °C unter Stickstoffatmosphäre getempert und die Veränderung der Winkelverteilung nach unterschiedlichen Temperdauern ermittelt.

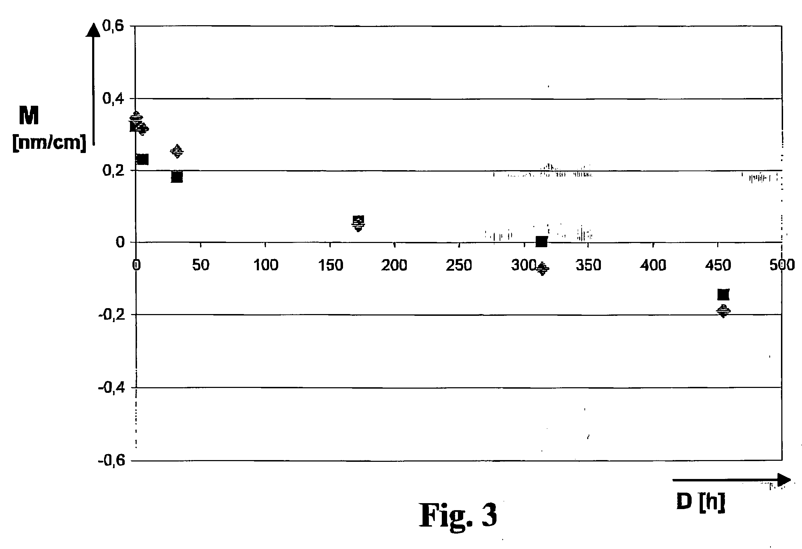

Das Ergebnis dieses Vorversuches zeigt das Diagramm von Figur 3. Darin ist die Maßzahl "M" in der Einheit [nm/cm], die die Spannungsdoppelbrechung und die Orientierung der schnellen Achse charakterisiert, gegen die Temperdauer "D" aufgetragen. Demnach setzt mit Beginn des Tempervorgangs unmittelbar auch eine Umorientierung der Winkelverteilung der schnellen Achse der Spannungsdoppelbrechung von einer eher tangentialen Verteilung in Richtung auf eine eher radialsymmetrische Verteilung ein, wobei der Grad der Umorientierung aber erst nach einer Temperdauer von ca. 50 Stunden so groß wird, dass er technisch relevant erscheint. Nach einer Temperdauer von ca. 250 bis 300 Stunden wird ein Nulldurchgang gemessen, so dass sich eine negative Maßzahl "M" ergibt. Das bedeutet, dass bei diesem Versuchsbarren der Charakter der anfänglich tangentialen Winkelverteilung der schnellen Achse infolge der Umorientierung während des Tempervorgangs aufgehoben wurde, und dass sich beim weiteren Tempern nunmehr der Charakter in Richtung der radialsymmetrische Verteilung verstärkt durchsetzt. Dieser Effekt setzt bis zu der längsten Temperdauer dieser Messreihe von 456 Stunden weiter fort und es ist anzunehmen, dass auch bei noch längeren Temperzeiten die Umorientierung der Winkelverteilung anhält. Allerdings ergeben sich infolge sehr langer Temperzeiten die oben beschriebenen Nachteile hinsichtlich der Reinheit und der Zusammensetzung der Glasproben, so dass Temperdauern von mehr als 30 Tagen (720 Stunden) nicht bevorzugt werden.

Nach diesen Vorversuchen wurde an 8 Versuchsbarren die im Folgenden näher beschriebene Temperbehandlung durchgeführt:

**Durchführung der zweiten Temperbehandlung**

Die Barren wurden bei den in Tabelle 1, Spalte 3 genannten Temperaturen während den in Spalte 4 genannten Zeiten in einer Stickstoff-Wasserstoffatmosphäre gehalten, wobei der Partialdruck des Wasserstoffs jeweils gerade so eingestellt war, dass sich weder eine Verarmung an Wasserstoff, noch eine Anreicherung in den Barren ergab. Der Absolutdruck der Temperatmosphäre betrug jeweils 1 bar (1 x 10$^5$ Pa).

Nach Abschluss der Temperbehandlung wurde der Temperofen ausgeschaltet, so dass die Quarzglasbarren in dem geschlossenen Ofen frei abkühlen konnten.

Nach einem Nachschleifen wurden erneut die Spannungsdoppelbrachung und der Verlauf der schnellen Achse gemessen, wie dies in Figur 2 angedeutet ist, und es wurden erneut die oben beschriebenen Laserbestrahlungsmessungen zur Ermittlung des Kompaktierungs- und Dekompaktierungsverhaltens vorgenommen.

Einzelheiten zur chemischen Zusammensetzung der jeweiligen Versuchsbarren und zu den Parametern bei der zweiten Temperbehandlung ergeben sich aus Tabelle 1.

Tabelle 1

| Barren Nr | Herstell- prozess | Temper- temp. [°C] | Temper- dauer [h] | OH- Gehalt [ppm] | $\Delta$-OH [ppm] | $H_2$-Gehalt [Moleküle/ cm$^3$] |
|---|---|---|---|---|---|---|
| 1 | Soot | 450 | 312 | 255 | 9 | 8x10$^{16}$ |
| 2 | Soot | 490 | 312 | 250 | 6 | 8x10$^{16}$ |
| 3 | Soot | 490 | 528 | 253 | 8 | 8x10$^{16}$ |
| 4 | DQ | 490 | 312 | 850 | 14 | 2x10$^{17}$ |
| 5 | DQ | 450 | 312 | 860 | 15 | 2x10$^{17}$ |
| 6 | DQ | 490 | 528 | 855 | 15 | 2x10$^{17}$ |
| 7 | Soot | 490 | 528 | 250 | 25 | 5x10$^{16}$ |
| 8 | DQ | 490 | 528 | 850 | 31 | 2x10$^{17}$ |

- Die Bezeichnung "Soot" in der Spalte "Herstellprozess" bezeichnet einen Versuchsbarren, der durch Flammenhydrplyse von $SiCl_4$ und OVD-Außenabscheidung nach dem "Sootverfahren" erhalten wurde. Die Bezeichnung "DQ" bezeichnet einen Versuchsbarren, der durch Flammenhydrolyse von $SiCl_4$ und VAD-Abscheidung bei direkter Verglasung der SiO2-Partikel auf dem Substrat erhalten wurde.

- Die Spalte $\Delta$-OH bezeichnet die maximale Abweichung des OH-Gehalts vom Mittelwert (Spalte 5), gemessen vor der zweiten Temperbehandlung und nach einem Abtrag des Randbereiches.

- Die Spalte "$H_2$-Gehalt" bezeichnet die mittlere Wasserstoffkonzentration vor der zweiten Temperbehandlung.

**Ergebnisse**

Die gefundenen Ergebnisse werden nachfolgend anhand den Figuren 1 bis 5 näher erläutert:

**Figur 1** zeigt eine Draufsicht auf die Oberfläche eines Quarzglasbarrens 1 mit Blickrichtung parallel zur Zylinderlängsachse 2. Der Barren hat einen Außendurchmesser von 250 mm, wobei er die Außenkontur des herzustellenden optischen Bauteils, dessen Außendurchmesser durch die gestrichelte Linien 7 dargestellt ist, mit einem radialen Übermaß 4 einer Stärke von ca. 30 mm und auf der Zylinder-Stimseiten von etwa 4 mm umfasst. Von dem radialen Übermaß von etwa 30 mm entfällt ein Großteil auf einen Bereich, der zwar zu dem herzustellenden optischen Bauteil gehört, jedoch außerhalb des optisch relevanten Bereiches des liegt (der CA-Durchmesser beträgt 190 mm). An gleichmäßig über dem Durchmesser verteilten Messpunkten 5 und 5a wurden die oben erläuterten Messungen zur Ermittlung des Spannungsdoppelbrechung s mittleren OH-Gehalts und die maximale Abweichung hiervon durchgeführt.

Weiterhin zeigt Figur 1 die anhand der Messung der Spannungsdoppelbrechung ermittelte Orientierung der schnellen Achse der Doppelbrechung in schematischer Darstellung an mehreren, gleichmäßig in einem 10x10 mm-Raster über der Messebene verteilten Datenpunkten 6. Es zeigte sich, dass die Quarzglas-Barren vor der zweiten Temperbehandlung im wesentlichen einen tangentialen Verlauf dieses Winkels - bezogen auf die Zylinderlängsachse 2 - aufwiesen, wie dies die Symbole 6 in der Figur 1 schematisch darstellen.

Die Messung des OH-Gehalts an den beiden äußeren Messpunkten 5a der Quarzglasbarren 1 ergab in der Regel eine Abweichung von mehr als 20 Gew.-ppm vom Mittelwert des OH-Gehalts, wie er unter Berücksichtigung dieser aller Messwerte berechnet wurde. Daher wurde vor der zweiten Temperbehandlung ein Teil des Übermaßes 4 mit einer Stärke im Bereich zwischen 5 mm und 156 mm mit dem zu geringen OH-Gehalt entfernt (außer bei den Barren Nr. 7 und Nr. 8).

**Figur 2** zeigt eine Draufsicht auf den Quarzglas-Barren gemäß Figur 1 nach der zweiten Temperbehandlung.

Die schnelle Achse der Doppelbrechung zeigt nunmehr überwiegend einen eher radialen Verlauf in Bezug auf die Zylinderlängsachse 2, wie dies die Symbole 6b schematisch zeigen. Nach dem Abtragen des Randbereiches wie anhand Figur 1 beschrieben, verblieb in der Regel gegenüber der optisch relevanten Kontur 7 (CA-Durchmesser = 190 mm) des herzustellenden optischen Bauteils am Zylindermantel der Barren noch ein Übermaß 4b mit einer Stärke zwischen 15 und 25 mm. Das Übermaß an den Stirnflächen der Proben betrug jeweils ca. 4 mm und wurde nicht verändert.

Bei dem Barren Nr. 7 ergab sich infolge der zweiten Temperbehandlung keine wesentliche Änderung der Orientierung der schnellen Achse der Doppelbrechung, wie dies auch aus Figur 3 ersichtlich ist.

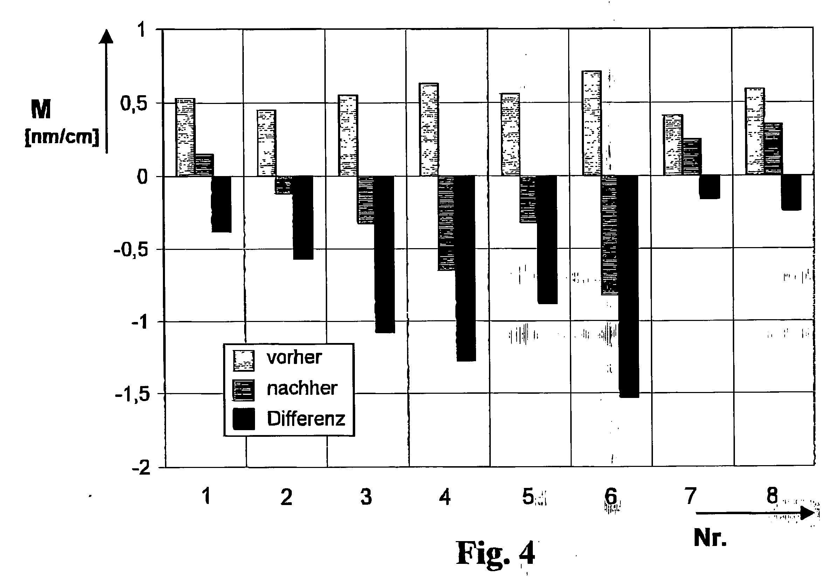

Das Balkendiagramm in Figur 4 zeigt für die acht der in Tabelle 1 genannten Versuchsbarren die anhand obiger Formel (1) ermittelte Maßzahl "M"(in nm/cm), welche die Amplitude als auch das Vorzeichen der Spannungsdoppelbrechung berücksichtigt. Für jeden der Versuchsbarren sind die Maßzahlen "M" vor der zweiten Temperbehandlung (1. Balken), nach der zweiten Temperbehandlung (2. Balken) und die Differenz dieser Maßzahlen (3. Balken) gegenübergestellt.

Daraus ergibt sich, dass bei allen Barren die Maßzahl "M" der Spannungsdoppelbrechung vor der zweiten Temperbehandlung ein positives Vorzeichen hat. Das bedeutet, dass die Spannungsverläufe in den jeweiligen Versuchsbarren vor dem Tempervorgang derart ist, dass die schnelle Achse der Spannungsdoppelbrechung im Wesentlichen einen tangentialen Verlauf um die Zylinderlängsachse 2 des Barrens aufweist. Abgesehen von Barren 1 und den beiden Vergleichsbeispielen (Barren 7 und Barren 8) hat die Maßzahl "M" nach der Temperbehandlung ein negatives Vorzeichen. Das heißt, es liegt eine eher radiale Orientierung der schnellen Achse der Spannungsdoppelbrechung vor. Da die Differenz (3. Balken) in allen Fällen negativ ist, hat sich die Winkelverteilung jedenfalls insgesamt von einer eher tangentialen Verteilung der Winkels in Richtung auf eine eher radiale Verteilung geändert.

Der Barren 1 zeigt zwar eine deutliche Umorientierung der Winkelverteilung der schnellen Achse der Spannungsdoppelbrechung, jedoch ist noch keine Umkehrung von der eher tangentialen Orientierung auf die eher radiale Orientierung erreicht.

Dies liegt möglicherweise an der kurzen Temperdauer und an der - im Vergleich zu Barren 2 - verhältnismäßig geringen Temper-Temperatur von 450 °C. Es ist aber zu erwarten, dass nach längerer Temperdauer eine komplette Umkehrung der Winkelverteilung zu erreichen wäre,

Bei den Barren Nr. 7 und Nr. 8 ergab sich ebenfalls eine Umorientierung der Winkelverteilung, wobei jedoch der Grad der Umorientierung infolge der zweiten Temperbehandlung gering bleibt, und trotz langer Temperdauer und hoher Temper-Temperatur eine vollständige Umkehr nicht erreicht wird. Es ist anzunehmen, dass der vergleichsweise geringe OH-Gehalt im Randbereich dieser Barren während der zweiten Temperbehandlung zu Spannungen führte, die eine Umorientierung des Winkelverlaufs der schnellen Achse der Spannungsdoppelbrechung erschweren.

Die Auswertung der Spanne der mittleren OH-Konzentrationen zwischen etwa 200 und 250 Gew.-ppm in den jeweiligen nach dem Sootverfahren hergestellten Versuchsbarren im Vergleich mit den OH-reicheren durch Direktverglasen erzeugten Barren zeigte darüber hinaus, dass die Umorientierung der Winkelverteilung (3. Balken: Differenz) mit steigendem OH-Gehalt des Quarzglases deutlicher ausfällt. Die Ursache dafür liegt vermutlich darin, dass jede OH-Gruppe die durchschnittliche Kettenlänge der Quarzglasstruktur verkürzt und somit die gesamte Struktur mit zunehmendem OH-Gehalt flexibler wird und dadurch eine strukturelle Neuausrichtung begünstigt wird.

Weiterhin zeigte es sich, dass zwischen der Umorientierung der Winkelverteilung und deren Ausgangsverteilung ein gewisser Zusammenhang besteht. Die Umkehrung der Winkelverteilung war um so ausgeprägter, je weniger diese vor dem Tempervorgang einer "idealen symmetrischen Verteilung" entsprach. Die zweite Temperbehandlung hat auf die Brechzahlhomogenität keinen signifikanten Einfluss; es zeigte sich, dass die Homogenität der Versuchsbarren im Wesentlichen erhalten blieb.

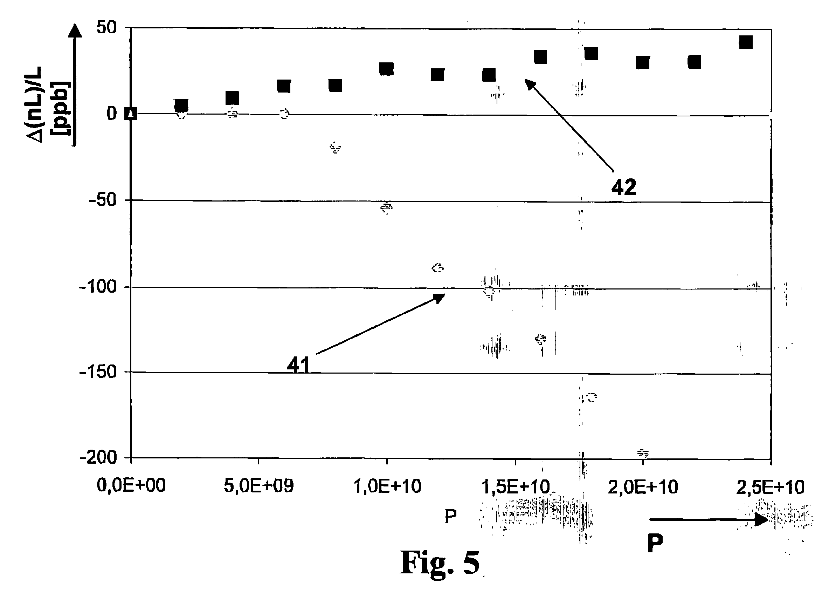

Den Einfluss der zweiten Temperbehandlung auf die Strahlenbeständigkeit, insbesondere auf das Kompaktierungs- und Dekompaktierungsverhalten nach Bestrahlung mit energiereicher UV-Strahlung zeigt das Diagramm von Figur 5 anhand von zwei Messproben mit Abmessungen von 25mmx25mmx100mm. Diese wurden aus Versuchsbarren erhalten, die aus dem gleichen Quarzglas hergestellt wurden, die dieselben Abmessungen aufwiesen und die den gleichen Vorbehandlungen unterworfen wurde, wie der Versuchsbarren Nr. 5 gemäß der obigen Tabelle. Die eine Messprobe wurde außerdem derselben zweiten Temperbehandlung unterworfen wie der Versuchsbarren 5.

In dem Diagramm von Figur 5 ist auf der y-Achse die Wellenfrontverzerrung in relativen Einheiten als Änderung des Brechungsindex (bei einer Meßwellenlänge von 633 nm) bezogen auf die optische Weglänge $\Delta(nL)/L$ aufgetragen gegen die Pulszahl "P" während der Bestrahlung der jeweiligen Messprobe.

Die Bestrahlung erfolgte mit UV-Strahlung einer Wellenlänge von 193 nm mit einer Pulsdauer von 20 ns und einer Pulsenergiedichte von 35 $\mu J/cm^2$. Die Wellenfrontverzerrung ergibt sich dadurch, dass die eingestrahlte, ebene Wellenfront durch räumlich unterschiedliche Brechungsindizes gestört wird. Die Wellenfrontverzerrung ist somit ein Maß für das Auftreten von Kompaktierung oder Dekompaktierung.

Das Diagramm zeigt typische Entwicklungen der Wellenfrontverzerrung mit der Pulszahl bei Bestrahlung der $25x25x100$ $mm^3$- Messproben. Die Kurve 41 zeigt die Entwicklung der Wellenfrontverzerrung mit der Pulszahl bei der Messprobe, die der zweite Temperbehandlung nicht unterworfen wurde. Die Kurve 42 zeigt diese Entwicklungen bei derjenigen Messprobe, die der zweiten Temperbehandlung wie Versuchsbarren 5 unterzogen wurde.

Bei der Kurve 41 wird mit zunehmender Pulszahl eine Verringerung der Wellenfrontverzerrung, d. h. Dekompaktierung, beobachtet, die bis zu der maximalen Pulszahl von 2,5 x $10^{10}$ Pulsen ständig zunimmt. Die Kurve 42 zeigt einen typischen Verlauf der Wellenfrontverzerrung mit der Pulszahl "P" bei einer Messprobe, die einer zweiten Temperbehandlung im Sinne der Erfindung unterzogen wurde. Nach einem anfänglichen geringen Hub von etwa 35 ppb in Richtung einer Kompaktierung wird bis zu der maximalen Pulszahl eine im wesentlichen gleichbleibende Wellenfrontverzerrung beobachtet, jedoch keine Dekompaktierung, wie bei der Probe gemäß Kurve 41.

**Patentansprüche**

1. Verfahren zur Herstellung eines optischen Bauteils für die Übertragung ultravioletter Strahlung einer Wellenlänge von 250 nm und kürzer, wobei das Bauteil aus einem zylinderförmigen Quarzglasrohling mit einem mittleren OH-Gehalt von mehr als 50 Gew.-ppm gefertigt wird, der einer ersten Temperbehandlung zur Beseitigung von Spannungsdoppelbrechung unterworfen wird, **dadurch gekennzeichnet, dass** der Quarzglasrohling einer zweiten Temperbehandlung unterworfen wird, die ein Aufheizen und Halten des Quarzglasrohlings bei einer niedrigen Temper-Temperatur im Bereich zwischen 350°C und 800°C und während einer Temperdauer von mehr als 1 Stunde umfasst, mit der Maßgabe, dass ein Quarzglasrohling eingesetzt wird, bei dem in Richtung senkrecht zur Zylinderlängsachse die Abweichung vom mittleren OH-Gehalt maximal 20 Gew.-ppm beträgt.

2. Verfahren nach Anspruch 1 **dadurch gekennzeichnet, dass** die Temperdauer mindestens 50 Stunden beträgt.

3. Verfahren nach Anspruch 1 oder 2, **dadurch gekennzeichnet, dass** die Temperdauer maximal 720 Stunden beträgt.

4. Verfahren nach einem der vorhergehenden Ansprüche, **dadurch gekennzeichnet, dass** der Quarzglasrohling in einer Atmosphäre getempert wird, die Wasserstoff enthält.

5. Verfahren nach einem der vorhergehenden Ansprüche, **dadurch gekennzeichnet, dass** der Quarzglasrohling bei einem Druck zwischen 1 und 10 bar getempert wird.

6. Verfahren nach einem der vorhergehenden Ansprüche, **dadurch gekennzeichnet, dass** die zweite Temperbehandlung ein Halten bei einer Temperatur von mindestens 500°C umfasst, mit der Maßgabe, dass der mittlere Wasserstoffgehalt des Quarzglasrohlings infolge der zweiten Temperbehandlung um nicht mehr als +/- 20% (bezogen auf den anfänglichen Wasserstoffgehalt) verändert wird.

7. Verfahren nach einem der vorhergehenden Ansprüche, **dadurch gekennzeichnet, dass** der Quarzglasrohling eine Außenkontur des herzustellenden optischen Bauteils mit Übermaß umfasst, und dass zwischen der ersten und der zweiten Tamperaturbahandlung mindestens ein Teil des Übermaßes entfernt wird.

8. Verfahren nach einem der vorhergehenden Ansprüche, **dadurch gekennzeichnet, dass** der Quarzglasrohling vor der zweiten Temperbehandlung eine Außenkontur des herzustellenden optischen Bauteils mit Übermaß umfasst, und das Übermaß der Zylinder-Stirnflächen im Bereich zwischen 1 mm und 5 mm beträgt.

9. Verfahren nach einem der vorhergehenden Ansprüche, **dadurch gekennzeichnet, dass** der mittlere OH-Gehalt des Quarzglasrohlings vor der Temperaturbehandlung mindestens 450 Gew.-ppm beträgt.

10. Verfahren nach einem der vorhergehenden Ansprüche, **dadurch gekennzeichnet, dass** die mittlere Wasserstoffkonzentration des Quarzglasrohlings nach der zweiten Temperaturbehandlung mindestens 3 x $10^{16}$ Moleküle/cm$^3$ beträgt.

**Fig. 1**

**Fig. 2**

EP 1 568 666 A1

Fig. 3

Fig. 4

Fig. 5

**Europäisches Patentamt**

# EUROPÄISCHER RECHERCHENBERICHT

Nummer der Anmeldung

EP 05 00 3753

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 401 845 A (HERAEUS QUARZGLAS GMBH; SHIN-ETSU QUARTZ PRODUCTS CO., LTD; HERAEUS QU) 12. Dezember 1990 (1990-12-12) | 1-5,8-10 | C03C4/00 C03C3/06 C03B19/14 |
| Y | * Seite 4, Zeilen 43,44,49 - Zeile 51 * <br> * Seite 5, Zeile 36 - Zeile 50 * <br> * Seite 6, Zeile 52 - Zeile 54 * <br> * Seite 17, Zeilen 12,13,16 - Zeile 29 * <br> * Seite 18, Zeile 18 - Zeile 32 * <br> * Seite 19, Zeile 34 - Seite 20, Zeile 34 * <br><br> ----- | 7 | |
| Y | EP 1 114 802 A (NIKON CORPORATION) 11. Juli 2001 (2001-07-11) * Absätze [0017], [0026], [0063], [0064], [0187] - Absatz [0190] * ----- | 7 | |
| Y | EP 1 094 040 A (HERAEUS QUARZGLAS GMBH; SHIN-ETSU QUARTZ PRODUCTS CO.,LTD) 25. April 2001 (2001-04-25) * Absätze [0029], [0031], [0034], [0036], [0086] * ----- | 1-5,7,8, 10 | RECHERCHIERTE SACHGEBIETE (Int.Cl.7) |
| Y | DE 101 59 961 A1 (HERAEUS QUARZGLAS GMBH & CO. KG) 26. Juni 2003 (2003-06-26) | 7,8 | C03B C03C |
| A | ----- | 6 | |
| Y | PATENT ABSTRACTS OF JAPAN Bd. 015, Nr. 259 (C-0846), 2. Juli 1991 (1991-07-02) & JP 03 088742 A (SHINETSU SEKIEI KK), 15. April 1991 (1991-04-15) * Zusammenfassung * ----- | 1-5,10 | |

-/--

Der vorliegende Recherchenbericht wurde für alle Patentansprüche erstellt

| Recherchenort | Abschlußdatum der Recherche | Prüfer |
|---|---|---|
| München | 19. Mai 2005 | Deckwerth, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes Dokument

EPO FORM 1503 03.82 (P04C03)

**Europäisches
Patentamt**

## EUROPÄISCHER RECHERCHENBERICHT

Nummer der Anmeldung

EP 05 00 3753

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | PATENT ABSTRACTS OF JAPAN<br>Bd. 2002, Nr. 07,<br>3. Juli 2002 (2002-07-03)<br>& JP 2002 087833 A (SUMITOMO METAL IND LTD), 27. März 2002 (2002-03-27)<br>* Zusammenfassung *<br>----- | 1-5,10 | |
| A | PATENT ABSTRACTS OF JAPAN<br>Bd. 1999, Nr. 03,<br>31. März 1999 (1999-03-31)<br>& JP 10 324538 A (SHINETSU QUARTZ PROD CO LTD), 8. Dezember 1998 (1998-12-08)<br>* Zusammenfassung *<br>----- | 1-10 | |

RECHERCHIERTE
SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 19. Mai 2005 | Deckwerth, M |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**           EP 05 00 3753

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2005

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0401845 | A | 12-12-1990 | AT | 116448 | T | 15-01-1995 |
| | | | DE | 69015453 | D1 | 09-02-1995 |
| | | | DE | 69015453 | T2 | 01-06-1995 |
| | | | EP | 0401845 | A2 | 12-12-1990 |
| | | | JP | 3088742 | A | 15-04-1991 |
| | | | JP | 6053593 | B | 20-07-1994 |
| | | | US | 5086352 | A | 04-02-1992 |
| | | | US | 5325230 | A | 28-06-1994 |
| | | | JP | 3109233 | A | 09-05-1991 |
| | | | JP | 6027013 | B | 13-04-1994 |
| | | | JP | 3101282 | A | 26-04-1991 |
| | | | JP | 6048734 | B | 22-06-1994 |
| | | | JP | 1898031 | C | 23-01-1995 |
| | | | JP | 3088743 | A | 15-04-1991 |
| | | | JP | 6027014 | B | 13-04-1994 |
| EP 1114802 | A | 11-07-2001 | EP | 1114802 | A1 | 11-07-2001 |
| | | | US | 6672109 | B1 | 06-01-2004 |
| | | | WO | 0064826 | A1 | 02-11-2000 |
| EP 1094040 | A | 25-04-2001 | JP | 3069562 | B2 | 24-07-2000 |
| | | | JP | 2001114529 | A | 24-04-2001 |
| | | | EP | 1094040 | A2 | 25-04-2001 |
| | | | JP | 3472234 | B2 | 02-12-2003 |
| | | | JP | 2001114530 | A | 24-04-2001 |
| | | | TW | 593191 | B | 21-06-2004 |
| | | | US | 6451719 | B1 | 17-09-2002 |
| DE 10159961 | A1 | 26-06-2003 | AT | 280139 | T | 15-11-2004 |
| | | | EP | 1318124 | A2 | 11-06-2003 |
| | | | JP | 2003176141 | A | 24-06-2003 |
| | | | TW | 583150 | B | 11-04-2004 |
| | | | US | 2003115905 | A1 | 26-06-2003 |
| JP 03088742 | A | 15-04-1991 | AT | 116448 | T | 15-01-1995 |
| | | | DE | 69015453 | D1 | 09-02-1995 |
| | | | DE | 69015453 | T2 | 01-06-1995 |
| | | | EP | 0401845 | A2 | 12-12-1990 |
| | | | JP | 6053593 | B | 20-07-1994 |
| | | | US | 5086352 | A | 04-02-1992 |
| | | | US | 5325230 | A | 28-06-1994 |
| JP 2002087833 | A | 27-03-2002 | KEINE | | | |
| JP 10324538 | A | 08-12-1998 | JP | 3403317 | B2 | 06-05-2003 |
| | | | DE | 69816758 | D1 | 04-09-2003 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**                    EP 05 00 3753

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2005

| Im Recherchenbericht angeführtes Patentdokument | Datum der Veröffentlichung | Mitglied(er) der Patentfamilie | Datum der Veröffentlichung |
|---|---|---|---|
| JP 10324538          A | | DE     69816758 T2<br>WO     9852879 A1<br>EP     0917523 A1<br>US     6143676 A | 03-06-2004<br>26-11-1998<br>26-05-1999<br>07-11-2000 |

EPO FORM P0461

Für nähere Einzelheiten zu diesem Anhang : siehe Amtsblatt des Europäischen Patentamts, Nr.12/82